Europäisches Patentamt

European Patent Office

Office européen des brevets

(19)

(11) Veröffentlichungsnummer: **0 262 094**
**B1**

(12) **EUROPÄISCHE PATENTSCHRIFT**

(45) Veröffentlichungstag der Patentschrift:
21.03.90

(21) Anmeldenummer: 87810540.2

(22) Anmeldetag: 18.09.87

(51) Int. Cl.⁴: **B61D 7/18**, B60P 1/56,
B65D 90/62

(54) Entladeklappe für rieselfähiges Schüttgut.

(30) Priorität: 22.09.86 CH 3782/86

(43) Veröffentlichungstag der Anmeldung:
30.03.88 Patentblatt 88/13

(45) Bekanntmachung des Hinweises auf die Patenterteilung:
21.03.90 Patentblatt 90/12

(84) Benannte Vertragsstaaten:
CH DE FR IT LI

(56) Entgegenhaltungen:
US-A- 3 717 110

(73) Patentinhaber: SCHWEIZERISCHE ALUMINIUM AG,
CH-3965 Chippis(CH)

(72) Erfinder: Zehnder, Jürg, Husacherstrasse 2,
CH-8142 Uitikon(CH)

## Beschreibung

Die Erfindung bezieht sich auf eine Entladeklappe eines stationären oder mobilen Silos für rieselfähiges Schüttgut mit wenigstens einer Auslauföffnung, welche Entladeklappe aus einem an einer ersten Silowand befestigten oberen Klappenteil und einem an ihr gelenkig verbundenen unteren Klappenteil besteht und mittels eines antreibbaren Betätigungsgestänges in Oeffnungs- bzw. Schliessstellung schwenkbar ist.

Sowohl an ortsfesten als auch an beweglichen Silos (LKW, Eisenbahnwagen), die rieselfähiges Schüttgut enthalten, muss die Auslauföffnung in der Schliessstellung dicht verschliessen, was wegen der Durchbiegung langer Kanten nicht einfach ist. Klappen herkömmlicher Art können an der unteren Dichtkante vom Betätigungsgestänge nur an beiden Enden festgehalten werden und müssen deshalb extrem steif gebaut sein, damit bei Durchbiegung der Klappe unter Last der Spalt an der Dichtkante kleiner bleibt als der Durchmesser des Granulats. Es ist auch bekannt, dass bei längeren Klappen mehrere Befestigungspunkte über die ganze Länge verteilt sind, beispielsweise mit 4 bis 6 Nocken, welche von einer Daumenwelle an die Silowand gedrückt werden. Mittels Schwenkens der Daumenwelle können alle Verriegelungen gleichzeitig geöffnet werden, worauf die Platte in vertikale Lage schwenkt und das Schüttgut auslaufen kann.

In der US-A 3 717 110 werden mit Motorkraft betriebene Entladeklappen für einen siloartigen Behälter beschrieben, welche gegeneinander in die Schliessstellung und voneinander weg in die Oeffnungsstellung schwenkbar sind. Jede der beiden Klappen umfasst einen äusseren und einen inneren Abschnitt, welche mit Bodenplatten belegt sind und in Schliessstellung die Silowand bilden. Die einzelnen Klappen sind mittels profilartiger Bauelemente zu kastenförmigen Konstruktionselementen vereinigt.

Beim Oeffnen der Verschlussklappen werden deren beide Teile von der gestreckten in eine abgewinkelte Lage gebracht, die Auslauföffnung des Silos wird damit freigegeben.

Der untere Rand einer der beiden Verschlussklappen ist mit einer Passleiste und einer unmittelbar daneben, vertikal zur Verschlussklappe, angeordneten Verschlussplatte mit einer endständigen Oeffnung versehen. In Schliessstellung der beiden Verschlussklappen schwenkt ein Verschlussmechanismus einen Fanghaken in die Oeffnung und fixiert die andere Verschlussklappe auf der Passleiste.

Die zentral von einem Zylinder betätigten Verschlussmechanismus und Betätigungsorgane für die Verschlussklappen machen ein kompliziertes Gestänge mit zahlreichen Kraftumlenkungen notwendig.

Der Erfinder hat sich die Aufgabe gestellt, eine Entladeklappe für rieselfähiges Schüttgut der eingangs genannten Art zu schaffen, bei welcher die Klappensteifigkeit und das Klappengewicht vermindert werden kann, ein reduzierter Energieaufwand für die Klappenbetätigung erforderlich ist und wegen der günstigeren Klappengeometrie und des einfacher ausgebildeten Betätigungsgestänges ein geringerer Platzbedarf beansprucht wird.

Die Aufgabe wird erfindungsgemäss dadurch gelöst, dass der untere Rand des in bezug auf den oberen Klappenteil gestreckten oder abgewickelten unteren Klappenteils als sich über die ganze Länge erstreckende Auflagenase ausgebildet ist, welche in Schliessstellung linien- oder flächenförmig in einer im Bereich des unteren Rands einer zweiten Silowand angeordneten Längsnut aufliegt, und an einem der beiden Klappenteile eine auf den anderen Klappenteil ein Drehmoment ausübende Vorrichtung befestigt ist, wobei sich der Winkel zwischen dem oberen und dem unteren Klappenteil in Oeffnungsstellung derart verkleinert, dass beim Schliessvorgang durch das ausschliesslich am oberen Klappenteil angreifende Betätigungsgestänge die Auflagenase in die Längsnut einführbar ist.

Erfindungsgemäss kann der obere Klappenteil mittels eines konstruktiv sehr vereinfachten Betätigungsgestänges geschwenkt werden. Je nach Länge der Entladeklappe sind wenigstens zwei bis etwa sechs Stangen notwendig. Bei bekannten Vorrichtungen ist ein Mehrfaches davon notwendig, weil weitere Stangen zum unteren Klappenteil führen müssen und der Winkel zwischen beiden Klappenteilen ebenfalls mit Hilfe des Betätigungsgestänges eingestellt wird. Die erfindungsgemäss angeordnete Vorrichtung zur Ausübung eines Drehmoments ermöglicht diese im Hinblick auf Investitions- und Betriebskosten sich vorteilhaft auswirkende Vereinfachung.

Wie bei bekannten Entladeklappen wird zum Antrieb des Betätigungsgestänges ein Elektromotor, ein hydraulischer oder ein pneumatischer Zylinder eingesetzt. Selbstverständlich können mit demselben Antriebsorgan auch mehrere am selben oder an benachbarten Silos angebrachte Entladeklappen betätigt werden.

Die Entladeklappe kann aus üblichen Bauteilen zusammengesetzt sein, wobei die Klappenteile aus einem gespritzten Hartkunststoff bestehen oder mittels Strangpressens hergestellt sind. Aus fertigungstechnischen und statischen Gründen sind Klappenteile aus einem stranggepressten Metall, insbesondere Aluminium oder einer bekannten Aluminium-Presslegierung, bevorzugt.

Eine Entladeklappe aus stranggepresstem oberem und unterem Klappenteil erlaubt auch, dass die Gelenkteile mitgepresst werden, die sich über ihre ganze Länge schwenkbar ineinanderstecken lassen. Selbstverständlich können die Klappenteile auch mit einem oder mehreren Scharnier/en bekannter Bauart verbunden sein. Der Gelenkbereich zwischen den beiden Klappenteilen ist bevorzugt mit einer Dichtungsleiste oder einem Gummilappen abgedeckt, damit insbesondere bei feinkörnigem Schüttgut keine die aufeinander gleitenden Teile beschädigenden Eingriffe entstehen können.

Die den Winkel zwischen den beiden Klappenteilen verkleinernde Vorrichtung, welche ein Drehmoment ausübt, besteht zweckmässig aus wenigstens einer auf der Aussenseite des einen Klappenteils befestigten Blattfeder. Vorzugsweise wird auf der Aussenseite des oberen Klappenteils eine Längsnut ausgespart, in welche zur Befestigung der Blattfeder/n Klemmplättchen eingeführt werden kann.

Die Entladeklappe kann nicht in Schliessstellung in die Nut eingeführt werden. Während des Schliessvorgangs, mit anderen Worten während der Rückführung der Entladeklappe durch das Betätigungsgestänge, muss der untere Klappenteil gegenüber dem oberen derart abgewinkelt sein, dass die Auflagenase in die Längsnut einführbar ist. Dies wird vorzugsweise durch wenigstens eine der beiden Massnahmen erleichtert:
- Der untere Klappenteil ist in bezug auf den oberen Klappenteil bis zu einem Anschlag schwenkbar und wird von der das Drehmoment ausübenden Vorrichtung stets in dieser Position fixiert, wenn das Betätigungsgestänge keine Kraft ausübt.
- Die Längsnut weist in Richtung der Befestigung des oberen Klappenteils eine Gleitfläche auf, entlang welcher die Auflagenase zur Schliessstellung gezogen wird.
- Die Entladeklappe wird am oberen Rand des oberen Klappenteils in üblicher Weise schwenkbar befestigt, im Normalfall an wenigstens zwei oberen Lagerböcken, welche vorzugsweise mittels Klemmplättchen in einer hinterschnittenen Nut der ersten Silowand befestigt sind.

Die Längsöffnung zwischen der Silowand und dem oberen Klappenteil kann mittels eines einstückig mit der Silowand ausgebildeten Nockens abgedichtet werden, welcher sich in Form eines Profillappens in Richtung der Längsnut in der anderen Silowand erstreckt. In Schliessstellung liegt der obere Klappenteil am erwähnten Profillappen an. Anstelle des Profillappens kann an der Innenseite der Silowand eine Gummiblende festgelegt werden, welche ebenfalls das Austreten von Schüttgut durch den Spalt zwischen Silowand und oberem Klappenteil verhindert.

Der Angriffspunkt des Betätigungsgestänges am oberen Klappenteil liegt bevorzugt nahe dem Gelenk zum unteren Klappenteil. Infolge der Hebelwirkung ist so die Kraftübertragung am günstigsten. Zweckmässig ist aus dem oberen Klappenteil eine Bohrung ausgespart, in welche der Gelenkzapfen eingepresst werden kann. Ein den Gelenkteil des unteren Klappenteils übergreifender, zylinderförmig ausgebildeter Bund am Gelenkzapfen verhindert eine relative Verschiebung der beiden Klappenteile in Längsrichtung.

Die erfindungsgemässe Entladeklappe kann entlang ihrer ganzen Länge auf einer Auflagelinie oder -fläche der Längsnut abstützen. Damit werden nicht nur das Klappengewicht und der aufzubringende Energieaufwand vermindert, sondern auch die Leckanfälligkeit geringer. Das einfach ausgebildete Betätigungsgestänge führt zu einer erheblichen Herabsetzung des maschinenbaulichen Aufwandes und zu einem geringeren Platzbedarf.

Die Entladeklappe kann für alle rieselfähigen Schüttgüter in stationären oder mobilen Silos eingesetzt werden, seien sie feinkörnig wie Tonerde oder Zement oder grobkörnig wie Koks. Auch für Getreide, Kunststoffgranulate und dgl. ist die Entladeklappe ideal geeignet.

Die Erfindung wird anhand der Zeichnung näher erläutert, die schematischen Schnitte bzw. Teilschnitte oder stilisierten Darstellungen zeigen in:

- Fig. 1 einen Querschnitt durch eine Entladeklappe,
- Fig. 2 einen vergrösserten Querschnitt durch den Bereich der Aufhängung des unteren Klappenteils am oberen und der Befestigung einer Blattfeder,
- Fig. 3 eine Draufsicht auf den Uebergangsbereich vom oberen zum unteren Klappenteil mit einem Gelenkzapfen,
- Fig. 4 eine stilisierte Seitenansicht eines Strassenfahrzeugs mit einem Doppelsilo,
- Fig. 5 eine stilisierte Stirnansicht eines Schienenfahrzeugs mit einem in Längsrichtung verlaufenden Doppelsilo, und
- Fig. 6 eine stilisierte Entladeklappe mit in Schliessstellung abgewinkeltem oberem und unterem Klappenteil.

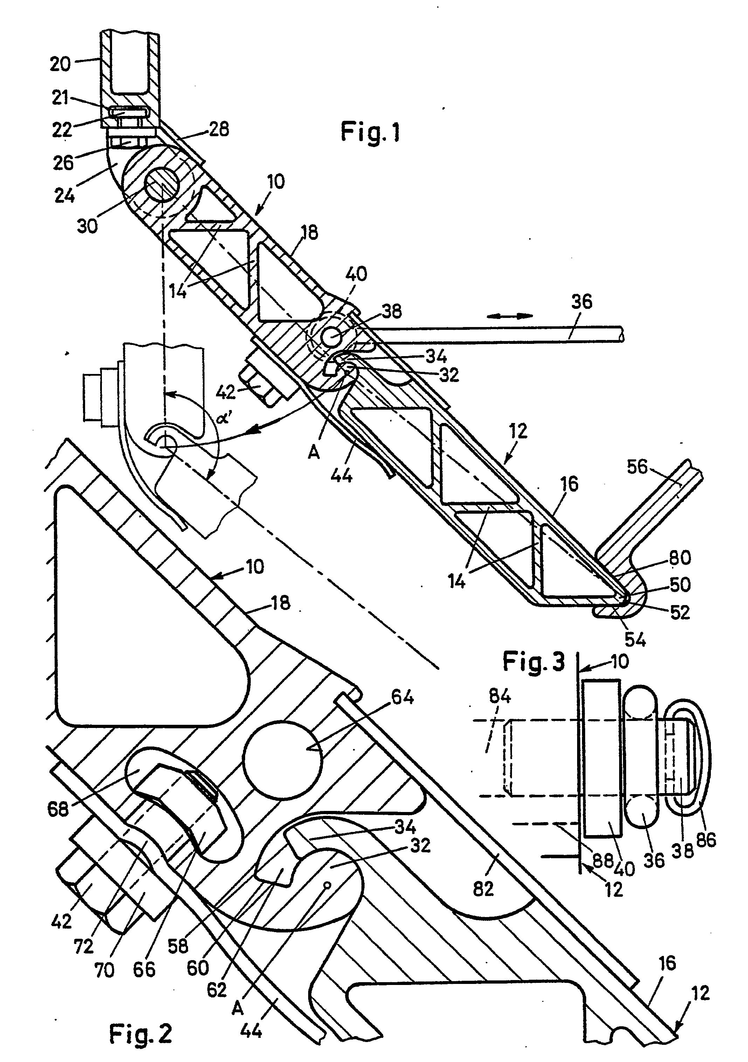

Die in Fig. 1 dargestellte, kniehebelartige Entladeklappe besteht aus einem oberen Klappenteil 10 und einem unteren Klappenteil 12, beides Aluminium-Strangpressprofile mit Querstegen 14. Die nach innen des Silos gerichtete Aussenfläche 16 des unteren Klappenteils 12 und Aussenfläche 18 des oberen Klappenteils 10 bilden bei Schliessstellung wie dies in Fig. 1 dargestellt wird - die Seitenwand des Silos.

Der obere Klappenteil 10 ist an der ersten Silowand 20 befestigt. Die nach unten weisende Stirnfläche dieser Silowand 20 weist eine hinterschnittene, sich über die ganze Länge erstreckende Nut 21 auf, in welche ein rhombusförmiges Klemmplättchen 22 eingeführt ist. Dieses dient der Befestigung eines oberen Lagerbocks 24 mittels einer in die Gewindebohrung des Klemmplättchens 22 eingeführten Schraube 26. Beim Anziehen der Schraube verkeilt sich das Klemmplättchen in bekannter Weise in der hinterschnittenen Nut 21. Ein in Richtung der verschlossenen Entladeklappe laufender Profillappen 28 deckt den Bereich eines in eine entsprechende Oeffnung des Lagerbocks 24 geführten Bolzens 30 ab, um welchen der obere Klappenteil 10 schwenkbar ist.

Der untere Randbereich des oberen Klappenteils 10 ist als in Längsrichtung verlaufendes Halbrundprofil 32 ausgebildet, welches die Drehachse A für den unteren Klappenteil 12 bildet. Ein in bezug auf den Innenquerschnitt dem Halbrundprofil 32 entsprechendes Hakenprofil 34 des unteren Klappenteils 12 ist schwenkbar eingehängt.

Das hin- und herbewegbare Betätigungsgestänge 36 ist mit dem oberen Klappenteil 10 über einen benachbart der Achse A angeordneten Gelenkzapfen 38 verbunden. Dieser weist einen grossen, im Querschnitt kreisförmigen Bund 40 auf und übergreift das Hakenprofil 34 des unteren Klappenteils 12. Damit ist gesichert, dass sich der untere Klappenteil 12 nicht in Längsrichtung verschieben kann.

Auf der Aussenseite des oberen Klappenteils 10 ist mittels Schrauben 42 eine Blattfeder 44 befestigt, welche aus etwa 1,2 mm dickem Stahlblech besteht und sich über die ganze Länge des Klappenteils 10 erstreckt oder in Teilstücken ausgebildet ist. Die Blattfeder 44, welche die die Torsionsbewegung bewirkende Vorrichtung ist, steht unter starker Federspannung.

Der untere Rand des unteren Klappenteils 12 wird durch eine Auflagenase 50 gebildet, welche in die Längsnut 52 eingreift und entlang der ganzen Klappenlänge auf der Auflagefläche 54 der zweiten Silowand 56 flächenförmig aufliegt. Der Bereich des Gelenks der geöffneten, im Winkel α' abgeknickten Entladeklappe ist angedeutet.

Fig. 2 zeigt in vergrösserter Darstellung, wie die Schwenkbewegung des über das Hakenprofil 34 am Halbrundprofil 32 des oberen Klappenteils 10 eingehängten unteren Klappenteils 12 erfolgt. Beim Oeffnen der Entladeklappe nähert sich die Stirnseite 58 des Hakenprofils 34 dem Anschlag 60 des das Halbrundprofil 32 umgebenden gekrümmten Längsschlitzes 62. Beim Aufstossen der Stirnseite 58 am Anschlag 60 kann der Winkel zwischen den Klappenteilen 10,12 nicht mehr verkleinert werden, die Blattfeder 44 hält den unteren Klappenteil 12 in dieser Position fest. Selbstverständlich können auch andere zum Anschlag geeignete Flächen ausgebildet sein.

Neben der kreisrunden koextrudierten Bohrung 64 für den Gelenkzapfen 38 ist für die Klemmplättchen 66 eine C-förmig hinterschnittene Nut 68 ausgespart. Die Klemmplättchen 66 dienen der Fixierung der Blattfeder 44 und werden mittels einer Schraube 42 festgelegt, wobei zwischen Schraubenkopf und Blattfeder eine Bride 70 angeordnet ist. Eine Zentrierwarze oder Sicke 72 hindert die Blattfeder 44 an einer Längsverschiebung.

Auf der Siloinnenseite ist der Uebergangsbereich zwischen oberem und unterem Klappenteil 10,12 mit einem sich in Längsrichtung erstreckenden Gummilappen 82 abgedeckt, welcher oben in eine ausgesparte Längsrille eingreift.

Fig. 3 zeigt einen in eine koextrudierte Bohrung 84 des oberen Klappenteils 10 eingepressten Gelenkzapfen 38 mit an beiden Klappenteilen 10,12 anliegendem Bund 40, welcher etwa den doppelten Durchmesser wie der Gelenkzapfen 38 selbst hat. Weiter ist das am Gelenkzapfen 38 kraftschlüssig angreifende Betätigungsgestänge 36 angedeutet, welches mit einer Bolzensicherung 86 üblicher Bauart gesichert ist. Gestrichelt eingezeichnet ist die oberste Mantellinie 88 des Hakenprofils 34 des unteren Klappenteils 12.

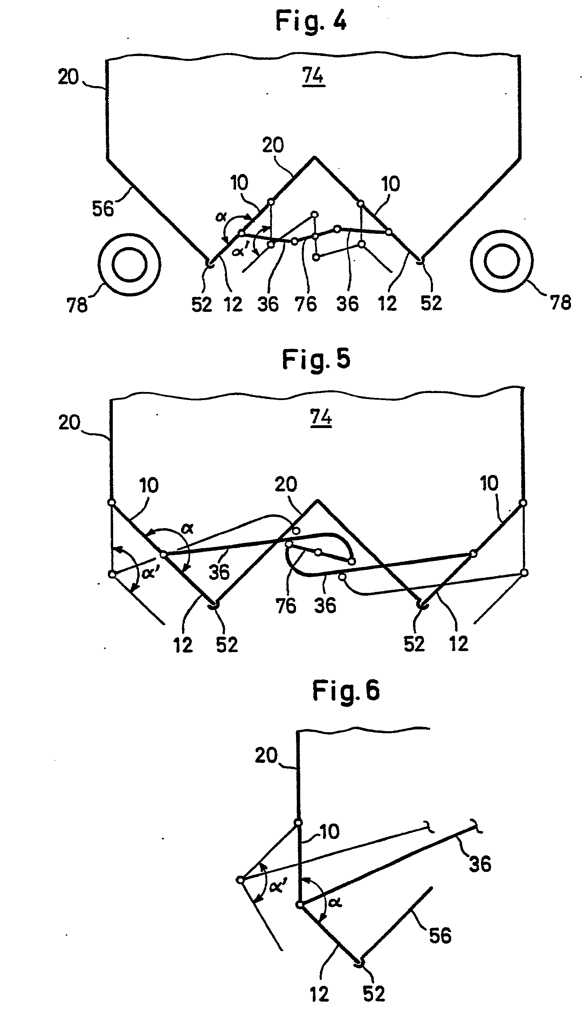

Der in Fig. 4 dargestellte Doppelsilo 74 eines Strassenfahrzeugs hat zwei Entladeklappen mit je einem oberen Klappenteil 10 und einem unteren Klappenteil 12. Die Entladeklappe ist am die erste Silowand 20 bildenden Sattelboden befestigt. Der obere und der untere Klappenteil 10,12 sind gestreckt, bilden also einen Winkel α von 180°. Ueber einen in Uebertotpunktlage befindlichen schwenkbaren Auslösehebel 76 sind beide Entladeklappen gleichzeitig betätigbar. Die Oeffnungsstellung ist mit feinerem Strich gezeichnet, der Winkel α' zwischen dem oberen und unteren Klappenteil 10,12 ist deutlich kleiner als 180°. Die Fahrzeugräder 78 verdeutlichen die Lage des Doppelsilos, welcher in Richtung des Fahrzeugzentrums entleerbar ist.

In Fig. 5 ist die Aussenwand des Doppelsilos 74 die erste Silowand 20. Der obere und der untere Klappenteil 10,12 bilden in Schliessstellung wiederum einen gestreckten Winkel α von 180°. Der von vorne betrachtete Eisenbahnwagen kann nach aussen entleert werden, wenn die Klappenteile 10,12 die mit feinerem Strich gezeichnete Lage mit dem kleineren Winkel α' annehmen.

Der Auslösehebel 76 für die gleichzeitige Oeffnung beider Entladeklappen ist wiederum in Uebertotpunktlage. Im Gegensatz zu Fig. 4 mit einer Zugbewegung stösst hier das Betätigungsgestänge beim Oeffnen der Entladeklappen.

In Fig. 6 ist eine Auslaufklappe mit einem oberen Klappenteil 10 und einem unteren Klappenteil 12 dargestellt, die in Schliessstellung einen Winkel α annehmen, der unter 180° liegt. Die geöffnete Stellung ist wiederum mit feinerem Strich dargestellt, wobei der Winkel α' dank der ein Drehmoment ausübenden Vorrichtung kleiner ist als in Schliessstellung.

Die Betätigung der Entladeklappe soll nun anhand von Fig. 1 erläutert werden. Die in Schliessstellung befindliche Entladeklappe wird durch Stossen mittels des Betätigungsgestänges 36, welches eine Kraft auf den oberen Klappenteil 10 ausübt, abgewinkelt. Dadurch rastet die Auflagenase 50 aus der Längsnut 52 aus, wobei der untere Klappenteil 12 vom Schüttgut nach unten gedrückt wird. Mit dem Betätigungsgestänge 36 wird die Entladeklappe auf maximale Oeffnung gebracht. Nachdem das Schüttgut aus dem Silo ausgeflossen ist, drückt die Blattfeder 44 den unteren Klappenteil 12 im Gegenuhrzeigersinn und dreht diesen, bis die Stirnseite 38 des Hakenpofils 34 auf dem Anschlag 60 (Fig. 2) des gekrümmten Längsschlitzes 62 aufschlägt. In dieser abgewinkelten Stellung, mit dem Winkel α', wird darauf die Entladeklappe durch das an dem oberen Klappenteil 10 ziehende Betätigungsgestänge 36 zugezogen. Die Auflagenase 50 schlägt auf der Gleitfläche 80 auf und wird bei anhaltendem Zug durch das Betätigungsgestänge 36 in die Längsnut 52 gezogen, bis die Schliessstellung wieder erreicht ist und beide Klappenteile 10,12 einen Winkel von 180° bilden.

## Patentansprüche

1. Entladeklappe eines stationären oder mobilen Silos für rieselfähiges Schüttgut mit wenigstens einer Ausflauföffnung, welche Entladeklappe aus einem an einer ersten Silowand (20) befestigten oberen Klappenteil (10) und einem mit diesem gelenkig verbundenen unteren Klappenteil (12) besteht und mittels eines antreibbaren Betätigungsgestänges (36) in Oeffnungs- bzw. Schliessstellung schwenkbar ist, dadurch gekennzeichnet, dass

der untere Rand des in bezug auf den oberen Klappenteil (10) gestreckten oder abgewinkelten unteren Klappenteils (12) als sich über die ganze Länge erstreckende Auflagenase (50) ausgebildet ist, welche in Schliessstellung linien- oder flächenförmig in einer im Bereich des unteren Rands einer zweiten Silowand (56) angeordneten Längsnut (52) aufliegt, und an einem der beiden Klappenteile (10,12) eine auf den anderen Klappenteil ein Drehmoment ausübende Vorrichtung (44) befestigt ist, wobei sich der Winkel ($\alpha$) auf der Siloinnenseite zwischen dem oberen und dem unteren Klappenteil (10,12) in Oeffnungsstellung derart zu einem Winkel ($\alpha'$) verkleinert, dass beim Schliessvorgang durch das ausschliesslich am oberen Klappenteil (10) angreifende Betätigungsgestänge (36) die Auflagenase (50) in die Längsnut (52) einführbar ist.

2. Entladeklappe nach Anspruch 1, dadurch gekennzeichnet, dass der obere und untere Klappenteil (10,12) stranggepresste Profile sind, vorzugsweise aus Aluminium oder einer Aluminiumlegierung.

3. Entladeklappe nach Anspruch 2, dadurch gekennzeichnet, dass die gelenkige Verbindung zwischen dem oberen und unteren Klappenteil (10,12) aus sich über die ganze Länge erstreckenden, schwenkbar ineinander steckbaren Gelenkteilen (32,34) besteht, welche gegen das Siloinnere vorzugsweise mit einer Dichtungsleiste oder einem Gummilappen (82) geschützt sind.

4. Entladeklappe nach einem der Ansprüche 1 bis 3, dadurch gekennzeichnet, dass die ein Drehmoment ausübende Vorrichtung eine oder mehrere aussen befestigte Blattfeder/n (44) ist/sind, welche vorzugsweise mittels eines in einer Längsnut des oberen Klappenteils (10) verankerten Klemmplättchens (66) fixiert ist/sind.

5. Entladeklappe nach einem der Ansprüche 1 bis 4, dadurch gekennzeichnet, dass der untere Klappenteil (12) in bezug auf den oberen Klappenteil (10) bis zu einem Anschlag (60) schwenkbar ist und/oder die Längsnut (52) eine etwa in Richtung der Aufhängung (24) des oberen Klappenteils (10) verlaufende Gleitfläche (80) aufweist, entlang welcher die Auflagenase (50) beim Schliessvorgang bis zum Erreichen der Endstellung gleitet.

6. Entladeklappe nach einem der Ansprüche 1 bis 5, dadurch gekennzeichnet, dass der obere Klappenteil (10) an wenigstens zwei oberen Lagerböcken (24) aufgehängt ist, welche vorzugsweise mittels Klemmplättchen (22) in einer hinterschnittenen Nut (21) der ersten Silowand (20) befestigt sind.

7. Entladeklappe nach einem der Ansprüche 1 bis 6, dadurch gekennzeichnet, dass der Uebergang von der ersten Silowand (20) zum oberen Klappenteil (10) mittels eines einstückig mit der Silowand ausgebildeten, etwa in Richtung der Längsnut (52) weisenden Profillappens (28) oder einer an der Silowand entsprechend festgelegten Gummiblende geschützt ist.

8. Entladeklappe nach einem der Ansprüche 1 bis 7, dadurch gekennzeichnet, dass der Gelenkzapfen (38) für das Betätigungsgestänge (36) nahe der Drehachse (A) zwischen dem oberen und unteren Klappenteil (10,12) angeordnet und vorzugsweise in eine koextrudierte Bohrung (84) eingepresst ist.

9. Entladeklappe nach einem der Ansprüche 1 bis 8, dadurch gekennzeichnet, dass der Gelenkzapfen (38) einen den unteren Klappenteil (12) übergreifenden Bund (40) aufweist.

10. Entladeklappe nach einem der Ansprüche 1 bis 9, dadurch gekennzeichnet, dass das Betätigungsgestänge (36) in Schliessstellung in Uebertotpunktlage ist.

## Revendications

1. Trappe de déchargement d'un silo fixe ou mobile, pour matières en vrac fluides, comportant au moins une ouverture de décharge, cette trappe étant constituée par une partie supérieure de trappe (10) fixée à une première paroi de silo (20) et par une partie inférieure de trappe (12) liée de manière articulée à la partie supérieure et pouvant être mise en position d'ouverture ou de fermeture par pivotement, au moyen d'une tringlerie d'actionnement (36) pouvant être entraînée, caractérisée par le fait que le bord inférieur de la partie inférieure (12), allongée ou formant un angle par rapport à la partie supérieure (10), est aménagé en tant que nez d'appui (50) qui s'étend sur toute la longueur et qui, en position fermée, s'applique par une ligne ou par une surface dans une rainure longitudinale (52) agencée dans la région du bord inférieur d'une deuxième paroi (56) du silo, et un dispositif (44) exerçant un couple sur l'autre partie de la trappe est fixé à l'une des deux parties de trappe (10, 12), l'angle ($\alpha$) entre les parties supérieure et inférieure (10, 12) de la trappe, du côté intérieur du silo, devenant un angle plus petit ($\alpha'$) en position d'ouverture, de manière telle que, lors du processus de fermeture sous l'effet de la tringlerie d'actionnement (36) attaquant exclusivement la partie supérieure (10) de la trappe, le nez d'appui (50) soit introduit dans la rainure longitudinale (52).

2. Trappe de déchargement selon revendication 1, caractérisée par le fait que les parties supérieure et inférieure (10, 12) de la trappe sont des profilés extrudés, de préférence en aluminium ou en alliage d'aluminium.

3. Trappe de déchargement selon revendication 2, caractérisée par le fait que la liaison articulée entre les parties supérieure et inférieure (10, 12) de la trappe est constituée par des parties d'articulation (32, 34) qui s'étendent sur toute la longueur, peuvent s'emboîter à pivotement l'une dans l'autre et sont protégées vis-à-vis de l'intérieur du silo, de préférence par une baguette d'étanchéité ou par une languette en caoutchouc (82).

4. Trappe de déchargement selon l'une des revendications 1 à 3, caractérisée par le fait que le dispositif exerçant un couple est constitué par un ou plusieurs ressort(s) à lame (44) attaché(s) à l'extérieur, qui est(sont) de préférence fixé(s) au moyen d'une plaquette de serrage (66) ancrée dans une rainure longitudinale de la partie supérieure (10) de la trappe.

5. Trappe de déchargement selon l'une des revendications 1 à 4, caractérisée par le fait que la partie inférieure (12) de la trappe est apte à pivoter, par rapport à la partie supérieure (10) de la trappe, jusqu'à une butée (60), et/ou la rainure longitudinale (52) présente, sensiblement dans la direction de la suspension (24) de la partie supérieure (10) de la trappe, une surface de glissement (80) le long de laquelle le nez d'appui (50) glisse jusqu'à ce que la position extrême soit atteinte, lors du processus de fermeture.

6. Trappe de déchargement selon l'une des revendications 1 à 5, caractérisée par le fait que la partie supérieure (10) de la trappe est suspendue par au moins deux supports-paliers supérieurs (24), lesquels sont fixés, de préférence au moyen de plaquettes de serrage (22), dans une rainure dotée de contre-dépouille (21) de la première paroi (20) du silo.

7. Trappe de déchargement selon l'une des revendications 1 à 6, caractérisée par le fait que la transition de la première paroi (20) du silo à la partie supérieure (10) de la trappe est protégée au moyen d'une patte de profilé (28) aménagée d'un seul tenant avec la paroi du silo et dirigée sensiblement dans la direction de la rainure longitudinale (52), ou par un cache en caoutchouc fixé de manière correspondante à la paroi du silo.

8. Trappe de déchargement selon l'une des revendications 1 à 7, caractérisée par le fait que le tourillon (38) pour l'articulation de la tige de tringlerie d'actionnement (36) est agencé à proximité de l'axe de rotation (A) entre les parties supérieure et inférieure (10, 12) de la trappe et est de préférence enfoncé à force dans un trou coextrudé (84).

9. Trappe de déchargement selon l'une des revendications 1 à 8, caractérisée par le fait que le tourillon d'articulation (38) présente un collet (40) débordant par-dessus la partie inférieure (12) de la trappe.

10. Trappe de déchargement selon l'une des revendications 1 à 9, caractérisée par le fait que dans la position de fermeture la tringlerie d'actionnement (36) est à une position au-delà du point mort.

## Claims

1. Discharge flap of a stationary or mobile silo for pourable bulk goods having at least one outlet opening, which discharge flap consists of an upper flap part (10) fastened to a first silo wall (20) and a lower flap part (12) connected articulately to the said upper flap part (10) and which can be swivelled into an opened or closed position by means of a drivable activation linkage (36), characterized in that the lower edge of the lower flap part (12), stretched or angled in relation to the upper flap part (10), is designed as a supporting bracket (50) extending over the entire length, which lies in closed position in linear or planar form in a longitudinal groove (52) arranged in the region of the lower edge of a second silo wall (56), and a device (44) is fastened to one of the two flap parts (10, 12) exerting a torque on the other flap part, the angle (α) on the inside of the silo between the upper and the lower flap part (10, 12) is reduced in opened position to an angle (α') in such a way that the supporting bracket (50) can be introduced into the longitudinal groove (52) during the closing process by means of the activation linkage (36) engaging solely on the upper flap part (10).

2. Discharge flap according to Claim 1, characterized in that the upper and lower flap parts (10, 12) are extruded sections, preferably of aluminium or an aluminium alloy.

3. Discharge flap according to Claim 2, characterized in that the articulated connection between the upper and lower flap parts (10, 12) consist of joint parts (32, 34) which extend over the entire length, can be plugged into each other in a swivelable manner, and are protected against the interior of the silo, preferably by a sealing strip or a rubber apron (82).

4. Discharge flap according to one of Claims 1 to 3, characterized in that the device exerting a torque is a leafspring (44), or a plurality of leafsprings (44), fastened to the outside which is/are preferably fixed by means of a small clamping plate (66) anchored in a longitudinal groove of the upper flap part (10).

5. Discharge flap according to one of Claims 1 to 4, characterized in that the lower flap part (12) can be swivelled in relation to the upper flap part (10) up to a stop (60) and/or the longitudinal groove (52) has a sliding surface (80) running approximately in the direction of the suspension (24) of the upper flap part (10), along which the supporting bracket (50) slides during the closing process until it reaches the end position.

6. Discharge flap according to one of Claims 1 to 5, characterized in that the upper flap part (10) is suspended on at least two upper pillow blocks (24), which are preferably fastened by means of small clamping plates (22) in an undercut groove (21) in the first silo wall (20).

7. Discharge flap according to one of Claims 1 to 6, characterized in that the transition from the first silo wall (20) to the upper flap part (10) is protected by means of a profile apron (28), constructed in one piece with the silo wall, pointing approximately in the direction of the longitudinal groove (52), or a rubber diaphragm fixed appropriately on the silo wall.

8. Discharge flap according to one of Claims 1 to 7, characterized in that the joint pin (38) for the activation linkage (36) is arranged near to the axis of rotation (A) between the upper and lower flap parts (10, 12) and preferably pressed into a co-extruded bore (84).

9. Discharge flap according to one of Claims 1 to 8, characterized in that the joint pin (38) has a collar (40) overlapping the lower flap part (12).

10. Discharge flap according to one of Claims 1 to 9, characterized in that the activation linkage (36) is beyond the dead-centre position in closed position.

EP 0 262 094 B1

Fig. 1

Fig. 2

Fig. 3

# Fig. 4

# Fig. 5

# Fig. 6